# EUROPÄISCHE PATENTSCHRIFT

(11) **EP 0 946 932 B1**
(45) Veröffentlichungstag und Bekanntmachung des Hinweises auf die Patenterteilung: **18.04.2001**
(21) Anmeldenummer: 97954442.6
(22) Anmeldetag: 19.12.1997
(51) Int. Cl.: G08C 15/00

(54) **SENSOR- UND AUSWERTESYSTEM, INSBESONDERE FÜR DOPPELSENSOREN ZUR ENDLAGEN- UND GRENZWERTERFASSUNG**
SENSOR AND EVALUATION SYSTEM, IN PARTICULAR FOR DOUBLE SENSORS FOR DETERMINING END POSITIONS AND LIMIT VALUES
SYSTEME CAPTEUR ET EVALUATEUR, EN PARTICULIER POUR CAPTEURS DOUBLES DESTINES A LA DETECTION DE POSITIONS EXTREMES ET DE VALEURS LIMITES

(30) Priorität: 20.12.1996 DE 19653291
(43) Veröffentlichungstag der Anmeldung: 06.10.1999
(73) Patentinhaber: Pepperl + Fuchs Gmbh, 68307 Mannheim (DE)
(72) Erfinder: BANSEMIR, Werner, D-68305 Mannheim (DE); JUNG, Gerhard, D-67240 Bobenheim-Roxheim (DE)
(74) Vertreter: Mierswa, Klaus, Dipl.-Ing.
(86) Internationale Anmeldenummer: EP9707181
(87) Internationale Veröffentlichungsnummer: WO9828725

(56) Entgegenhaltungen:
- GB-A- 1 504 130
- US-A- 3 587 076
- US-A- 4 348 671
- PATENT ABSTRACTS OF JAPAN vol. 8, no. 107 (E-245), 19.Mai 1984 & JP 59 021193 A (DAIZEN SOUGIYOU KK), 3.Februar 1984,

## Beschreibung

### Technisches Gebiet:

Die Erfindung betrifft ein Sensor- und Auswertesystem zur Datenerfassung an einer Meßstelle, insbesondere für Doppelsensoren zur Endlagen- und Grenzwerterfassung, bestehend aus wenigstens zwei Sensoren, die über einen Steuerkreis an einen räumlich beabstandeten Schaltverstärker mit einer Strom- oder Spannungsquelle angeschlossen sind, wobei eine Anschlußader von der Strom- oder Spannungsquelle zum Sensor und eine weitere Anschlußader vom Sensor zu einer Auswerteeinheit führt und das Sensorsignal jedes Sensors normalerweise in einer Veränderung des Stromflusses gegenüber dem Stromfluß im Ruhezustand des Sensors besteht und das Sensorsignal über den Steuerkreis zum Schaltverstärker übertragen wird, um dort in einer Auswerteeinheit ausgewertet und an einer Ausgabestufe in Form von Signalen (z.B. binär NULL, EINS) als Funktion des Sensors und der Zeit ausgegeben zu werden, gemäß dem Oberbegriff des Anspruchs 1.

### Stand der Technik:

Sensoren werden üblicherweise mit zwei Anschlußkabeln bzw. einer zweiadrigen Anschlußleitung mit einem Schaltverstärker verbunden und von diesem mit Gleichstrom oder -spannung versorgt. Das Sensorsignal besteht in einer Änderung der Stärke des durch den Sensor zur Auswerteeinheit fliessenden Gleichstroms gegenüber dem Stromfluß im Ruhezustand des Sensors. Beispielsweise schwingt ein im Sensor integrierter Oszillator, wenn der Stromkreis geschlossen ist, und nimmt im Ruhezustand, d.h. ohne Meßobjekt, einen bestimmten Strom auf, der als Ruhesignal gemessen wird. Nähert man der aktiven Fläche des Sensors ein Meßobjekt, so ändert sich der Stromverbrauch des Sensors, z.B. durch Wirbelstromverluste im Meßobjekt, und damit auch der Stromfluß in der Auswerteeinheit. In der Auswerteeinheit wird das Sensorsignal gemessen und verstärkt, und eine Ausgangsstufe erzeugt je nach Signalhöhe, z.B. beim Über- oder Unterschreiten einer bestimmten Schaltschwelle, ein Schaltsignal - z.B. binär "Null" oder "Eins". Das Schaltsignal informiert den Anwender, ob ein bestimmter Zustand des Meßobjekts vorliegt, z.B. eine bestimmte räumliche Lage oder ein bestimmter Druck.

Für viele Anwendungen muß festgestellt werden, ob sich der Zustand des Meßobjekts innerhalb bestimmter Toleranzgrenzen befindet. Zur Abfrage dieser zwei Grenzwerte sind daher zwei Sensoren, d.h. ein Doppelsensor bestehend aus einem Sensorpaar, mit vier Anschlußadern nötig. Dies bedeutet einen erheblicher Verdrahtungsaufwand, der für viele Anwendungen nachteilig ist. Insbesondere bei Anwendung in der Chemie sollten elektrische Leitungen auf ein Minimum reduziert werden. Es ist dazu bekannt, die zwei Steuerkreise bei Doppelsensoren einseitig zusammenzufassen und damit die vier Anschlußadern auf drei zu reduzieren. Dies hat jedoch beim Arbeiten mit eigensicheren Steuerkreisen entsprechend der DIN 19234 (NAMUR) den Nachteil, daß der sich ergebende Summenstrom im Nachweis der Eigensicherheit berücksichtigt werden muß, da bei NAMUR-Systemen die Kontrolle auf Störungen wie Leitungsbruch oder Kurzschluß über den Strom in der Schnittstelle zwischen Sensor und Schaltverstärker erfolgt.

Weiterhin sollen für viele Anwendungen mehr als zwei Zustände des Meßobjekts mit einem System aus mehreren Sensoren erfaßt werden. Auch hier bedeuten zwei Anschlußadern pro Sensor oder gegebenenfalls drei pro Sensorpaar einen erheblichen Verkabelungsaufwand und erfordern eine nachgeschaltete Elektronik, die die Anschlußkabel aufzunehmen und die entsprechenden Signale zu verarbeiten imstande ist. Dies ist aufwendig in der Montage und Dokumentation und birgt Fehlerquellen.

Ein weiterer Nachteil am Stand der Technik ist, daß induktiv arbeitende Sensoren räumlich nicht zu dicht zu einem Sensorsystem montiert werden dürfen, da sie sich beim gleichzeitigen Betrieb gegenseitig beeinflussen und so das Meßergebnis verfälscht wird.

Durch die DE 40 33 053 C1 ist eine Meßwerterfassung - und Übertragungseinrichtung bekannt geworden, bestehend aus einer Aufnehmer- und einer Detektierungseinheit, die zum Zwecke der Meßwertübermittlung induktiv miteinander koppelbar sind. Die Meßwerterfassung - und Übertragungseinrichtung soll Meßdaten so präparieren und übertragen, daß zum einen Umwelteinflüsse weitestgehend eliminiert werden, zum anderen die Meßdaten auch über längere Übertragungsstrecken ungestört kontaktlos übertragbar sind. Die Eliminierung von Umwelteinflüssen, z.B. Temperaturerhöhungen, wird dadurch erreicht, daß die Aufnehmereinheit neben einer Meßoszillatorschaltung eine Referenzschaltung enthält. Die Schwingungsfrequenz der Meßoszillatorschaltung ändert sich vornehmlich durch Änderungen der zu überwachenden Meßgröße, z.B. des Drucks, wird jedoch auch durch Umwelteinflüsse, z.B. Temperaturänderungen, beeinflußt und verfälscht. Die Referenzschaltung ist der Meßoszillatorschaltung nachgebildet, vermag jedoch nicht, auf Änderungen der Meßgröße zu reagieren. Ihre Frequenz ändert sich lediglich mit den Umwelteinflüssen. Störende Umwelteinflüsse sollen dadurch eliminiert werden, indem der Quotient aus dem Ausgangssignal der Meßoszillatorschaltung und dem Ausgangssignal der Referenzschaltung gebildet wird. Die Quotientenbildung erfolgt in einer elektronischen Rechenschaltung.

Das Ausgangssignal der elektronischen Rechenschaltung wird von der Aufnehmereinheit induktiv zu einer Detektierungseinheit übertragen. Die Rechenschaltung liefert ein quasi digitales Signal, welches sich relativ störunanfällig induktiv übertragen läßt. Die Information über den Zustand des Meßobjekts steckt dabei in der Frequenz dieses Signals bzw. in der Anzahl Zählimpulse pro Zeiteinheit.

Durch die US-A-3587076 ist ein System bekannt, mit welchem an einer Kontrollstelle alternativ zwei Meßwerte bezüglich einer davon beabstandeten Meßstelle angezeigt werden können. Kontroll- und Meßstelle sind über zwei elektrisch leitfähige Verbindungen miteinander verbunden, die insbesondere Leitungen zur Energieversorgung eines Geräts sind, welches mit den Sensoren an der Meßstelle überwacht werden soll. Diese regelmäßig bereits vorhandenen Leitungen werden zur Übertragung von Daten mitbenutzt, wodurch separate Signal- bzw. Datenleitungen eingespart werden. Über das Leitungspaar wird sowohl ein elektrisches Wechselsignal als auch ein elektrisches Gleichsignal übertragen. Beide Komponenten werden kontroll- und meßstellenseitig durch jeweils einen Filter getrennt, um unterschiedlichen Zielbaugruppen, nämlich Energie- bzw. Gleichstromquelle; Verbraucher bzw. Sensoren, zugeführt zu werden. Zwischen beiden Sensoren kann kontrollstellenseitig durch manuelles Umschalten der Polarität des Gleichsignals unterschieden werden, wobei jeweils nur ein Sensorsignal am Meßgerät angezeigt wird. Problematisch bei diesem System ist, daß es nicht möglich ist, beide Meßparameter gleichzeitig an der Kontrollstelle anzuzeigen.

Aus der GB 1504130 ist des weiteren ein System zum vereinfachten Auslesen von Transducern. Dabei werden jeweils zwei Transducer über drei Anschlußleitungen angeschlossen, von denen eine gemeinsam benutzt wird. Bei diesem System gelingt es somit, eine von vier Anschlußleitungen einzusparen.

### Technische Aufgabe:

Der Erfindung liegt die Aufgabe zugrunde, ein Sensor- und Auswertesystem der eingangs genannten Gattung zu schaffen, bei dem die Montage der einzelnen Sensoren zu einem System vereinfacht und der Verdrahtungsaufwand zwischen den Sensoren und dem Schaltverstärker reduziert ist sowie eine individuelle Kontrolle des Betriebszustands des einzelnen Sensors, eine enge räumliche Montage benachbarter Sensoren ohne gegenseitige Beeinflussung und eine kompakte Gestaltung des Schaltverstärkers möglich ist.

### Offenbarung der Erfindung und deren Vorteile:

Bei einem Sensor- und Auswertesystem zur Datenerfassung an einer Meßstelle, insbesondere für Doppelsensoren zur Endlagen- und Grenzwerterfassung, gemäß der eingangs genannten Gattung ist die Lösung der Aufgabe durch folgende Merkmale gekennzeichnet: a) Je zwei Anschlußadern zum Aufbau des Steuerkreises sind je zwei Sensoren - einem Sensorpaar - gemeinsam zugeordnet; b) jedem Sensorpaar ist eine Wechselstrom- oder Wechselspannungsschnittstelle zugeordnet, die sich im Bereich der Sensoren befindet und positive Signale zu und von einem Sensor sowie negative Signale zu und von dem anderen Sensor des Sensorpaars zu übertragen imstande ist, wobei die zwei Sensoren des Sensorpaars antiparallel zusammengeschaltet sind und stets einander abwechselnd betrieben werden; c) der Schaltverstärker trifft die Zuordnung der über dieselben Anschlußadern übermittelten Sensorsignale eines Sensorpaars zu dem jeweiligen Sensor anhand der Polarität der Signale; d) die Strom- oder Spannungsquelle ist eine Strom- oder Spannungsquelle wechselnder Polarität.

In weiterer vorteilhafter Ausgestaltungen der Erfindung ist zur Bildung der Wechselstrom- oder Wechselspannungsschnittstelle von den Anschlußadern, die die Verbindung zum Schaltverstärker herstellen, im Bereich der Sensoren je eine kurze Anschlußader mit einer in Reihe geschalteten Diode abgezweigt, wobei jeder Sensor des Sensorpaars mit zwei Anschlußadern, davon eine mit Diode, entgegengesetzer Polarität angeschlossen ist, d.h. die Sensoren eines Sensorpaars antiparallel zusammengeschaltet sind.

Der zum Schaltverstärker führenden Anschlußader ist wenigstens ein gepolter Komparator als Auswerteeinheit mit einem Speicher nachgeschaltet, der an der Ausgangsstufe zwei statische Signale entsprechend dem Zustand der Sensoren des Sensorpaars generiert.

Die Sensoren sind gepolte Analogtransmitter und die Auswerteeinheiten sind gepolte Analogeingänge oder A/D-Wandler mit Speicherverhalten.

Bei dem erfindungsgemäßen Sensor- und Auswertesystem sind in vorteilhafter Weise die zur Verbindung der Sensoren mit dem Schaltverstärker nötigen Anschlußadern von vier, gegebenenfalls drei, Adern pro Sensorpaar auf zwei pro Sensorpaar reduziert. Dadurch wird vorteilhaft der Verdrahtungsaufwand verringert wie dadurch die nötigen Anschlußpunkte am Schaltverstärker verringert werden, wodurch dieses kompakter gestaltet werden kann.

Bei dem erfindungsgemäßen Sensor- und Auswertesystem wird jeweils ein Sensorpaar durch ein Adernpaar mit Wechselstrom anstatt mit Gleichstrom angesteuert. Durch eine Wechselstrom/-spannungsschnittstelle ist sichergestellt, daß der einzelne Sensor mit Strom bzw. Spannung einer festen Polarität versorgt wird und sich die zwei Sensoren eines Sensorpaars in ihrem Betrieb stets abwechseln. Einer der Sensoren eines Sensorpaars wird beispielsweise mit der positiven bzw. negativen Halbwelle des Wechselstroms angesteuert, und das dazugehörige Sensorsignal besteht in der Amplitude der positiven bzw. negativen Halbwelle des der Auswerteeinheit übermittelten Stroms, d.h. die Information über den Zustand des einzelnen Sensors ist in der Amplitude der jeweiligen Halbwelle des über den gemeinsamen Steuerkreis übermittelten Signals enthalten. Die dem einzelnen Sensor zugeordnete Auswerteeinheit ist nur auf Signale der entsprechenden Polarität empfindlich; Signale mit der engegengesetzen Polarität werden ignoriert bzw. von der Auswerteeinheit ausgewertet, die dem anderen Sensor des Sensorpaars zugeordnet ist.

Die Auswerteeinheit kann ein gepolter Komparator oder ein gepolter Analogeingang oder A/D-Wandler sein. Unter Verzicht auf ein kontinuierliches Gleichstrom-Sensorsignal können bei abwechselndem Betrieb der Sensoren eines Sensorpaars durch Einspeisung von Wechselstrom zwei gepulste Signale über dasselbe Leitungspaar übertragen werden. Ein stationäres Signal an der Ausgangsstufe wird erreicht, indem der Auswerteeinheit ein Speicher nachgeschaltet wird, beispielsweise ein Spitzenwertspeicher, ein Tiefpaß oder eine Sample-and-Hold-Einheit.
Die Kabelersparnis hat neben der Möglichkeit der kompakteren Gestaltung des Schaltverstärkers auch den Vorteil, daß das gesamte Sensorsystem unter geringerem Aufwand zu verdrahten und damit wartungsfreundlicher und weniger fehleranfällig ist.

Die erfindungsgemäße Verschaltung zweier oder mehrerer Sensoren zu einem Sensorsystem unter verringertem Verkabelungsaufwand kann auch verwendet werden, wenn von zwei Sensoren einer hauptsächlich und der andere nur gelegentlich betrieben wird. Als Wechselstrom wird dann ein Signal verwendet, bei dem positive und negative Halbwelle unterschiedliche Länge haben, was gegebenenfalls auch manuell geschaltet wird.

Die Wechselstrom- oder Wechselspannungsschnittstelle im Bereich der Sensoren kann einfach dadurch gebildet werden, daß von den Anschlußadern, die die Verbindung zum Schaltverstärker herstellen, im Bereich der Sensoren je eine kurze Anschlußader mit einer in Reihe geschalteten Diode abzweigt, und dann jeder Sensor des Sensorpaars mit zwei Anschlußadern, davon eine mit Diode, mit entgegengesetzer Polarität angeschlossen ist.

In vielen Sensoren, insbesondere NAMUR-Sensoren, sind bereits Dioden als Verpolschutzdioden integriert, so daß nur eine feste Eingangspolarität zugelassen ist. In diesem Fall kann beim Aufbau der Wechslstromschnittstelle auf externe Dioden verzichtet werden, und es ist nur je eine Verzweigung der Anschlußadern im Eingangsbereich der Sensoren nötig, wobei auf die antiparallele Schaltung der Sensoren geachtet werden muß.

Das erfindungsgemäße Sensor- und Auswertesystem kann mit jeder Art von Sensoren, mechanischen oder elektronischen, analogen oder digitalen, aufgebaut werden. Dabei ist die Auswerteeinheit an die Art des Sensors (Analog/Digitalbetrieb) angepaßt. Besonders vorteilhaft ist das erfindungsgemäße Sensorsystem für Anlagen, bei denen eine Eigensicherheit, z.B. nach DIN 19234 (NAMUR), gefordert ist, beispielsweise bei Füllstandsüberwachung von Behältnissen mit explosiven Flüssigkeiten oder Druckmessung oder die Bestimmung eines Ventilzustands innerhalb einer derartigen Anlage. Bei der Überwachung des Betriebszustandes des einzelnen Sensors, z.B. Kontrolle auf Leitungsbruch, wird der Stromfluß durch den jeweiligen Steuerkreis gemessen, der nicht unter eine bestimmte Grenze fallen darf. Die Pegel des Wechselstroms und die Sensoren entsprechen DIN 19234 (NAMUR); je Sensorpaar ist eine Auswertung des Signals auf Leitungsbruch und Leitungskurzschluss getrennt nach den Sensoren vorgesehen.

In vorteilhafter Weise kann bei der erfindungsgemäßen Schaltung der Sensoren die Kontrolle des Betriebszustandes sensorselektiv durchgeführt werden, da mit der positiven bzw. negativen Halbwelle des Wechselstromsignals praktisch zwei unabhängige Signale oder Informationen zur Verfügung stehen.

Zur Erhöhung der Betriebssicherheit des Sensor- und Auswertesystems ist es vorteilhaft, wenn die Steuerkreise galvanisch von der Strom- oder Spannungsquelle und von den Auswerteeinheiten und nachgeschalteten Elementen getrennt ist, z.B. mit einem Transformator, der gleichzeitig von der Netzspannung auf niedrigere Spannungen im Bereich einiger Volt, wie von NAMUR gefordert, heruntertransformiert.

Da die Sensoren im erfindungsgemäßen Sensor- und Auswertesystem durch den Betrieb mit Wechselstrom zeitlich einander abwechselnd arbeiten, ist die gegenseitige Beeinflussung dicht aneinander montierter elektronischer, z.B. induktiver, Sensoren gegenüber dem gleichzeitigen kontinuierlichen Betrieb mit Gleichstrom verringert. Die Sensoren können bei mehr als zwei Sensoren etwa doppelt so dicht wie beim Betrieb mit Gleichstrom zu einem Sensorsystem zusammengeschlossen werden, da in der Regel erst übernächste Nachbarn gleichzeitig betrieben werden und einander beeinflussen und stören können, wobei jedoch die einzelnen Sensorpaare untereinander nicht weniger als den Abstand einzelner Sensoren wie beim Betrieb mit Gleichstrom haben.

Prinzipiell können auch mehr als zwei Sensoren über einen gemeinsamen Steuerkreis betrieben werden, wenn sich vor dem Sensor und im Schaltverstärker miteinander synchronisierte Sampleeinheiten befinden, so daß ein Sensor zu einem gegebenen Zeitpunkt kurzzeitig, jedoch nie gleichzeitig mit einem anderen Sensor, angeschaltet wird und das analysierte Sensorsignal der entsprechenden Ausgangsstufe zugewiesen wird. Verschaltung von nur zwei Sensoren ist jedoch wesentlich weniger aufwendig, da Ansteuerung der Sensoren und die Zuordnung der Signale einfach über die Polarität getroffen werden kann und die zum Aufbau der Wechselstromschnittstelle benötigten Dioden oft schon in die Sensoren integriert sind.

Kurzbezeichnung der Zeichnung, in der zeigen:
- Figur 1: ein Blockschaltbild eines Sensor- und Auswertesystems mit zwei Sensoren (z.B. einem Doppelsensor)
- Figur 2: ein Blockschaltbild eines Teils eines Sensor- und Auswertesystems mit zwei Sensoren mit alternativem Aufbau der Wechselstromschnittstelle
- Figur 3: ein Blockschaltbild eines Teils eines Sensor- und Auswertesystems mit zwei Sensoren mit Verpolschutzdioden
- Figur 4: ein Diagramm zur Darstellung der Sensorsignale und der Signale am Ausgang des Schaltverstärkers in Abhängigkeit vom Zustand der Sensoren für ein Sensorpaar

### Bevorzugte Ausführungsform der Erfindung:

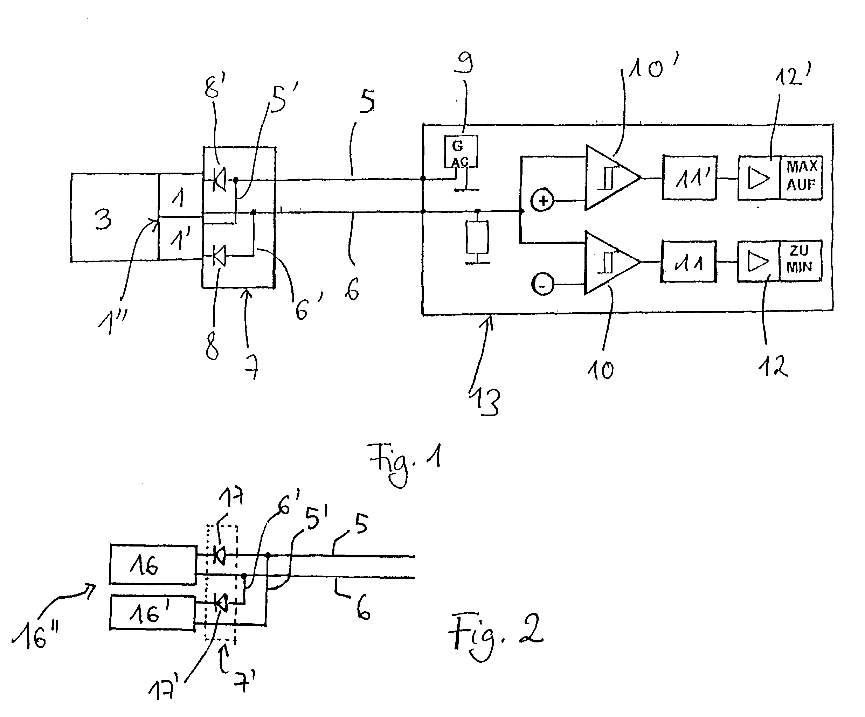

Figur 1 zeigt ein Blockschaltbild eines Sensor- und Auswertesystems mit zwei zu einem Sensorpaar 1" gekoppelten Sensoren 1 und 1', bzw. einem Doppelsensor 1". Die Sensoren 1, 1' dienen zur Meßwerterfassung an einer Meßstelle 3, z.B. zur Erfassung zweier Endlagen eines Meßobjekts, die einen Toleranzbereich definieren, oder von Druck und Ventilstellung. Das Sensorpaar ist mit zwei Anschlußadern 5, 6 mit einem Schaltverstärker 13 verbunden, in dem sich eine Wechselstromquelle 9 zur Stromversorgung des Sensorpaars 1" sowie Auswerte- 10, 10' und Speichereinheiten 11, 11' und Ausgangsstufen 12, 12' zur Auswertung und Ausgabe des Sensorsignals bzw. der Information über den Zustand des Sensors befinden. Der Schaltverstärker ist beispielsweise ein Trennschaltverstärker.

Die Anschlußadern 5 und 6 sind den Sensoren 1 und 1' des Sensorpaars 1" größtenteils gemeinsam zugeordnet und bilden einen größtenteils gemeinsamen Steuerkreis. Die Verbindung des Sensorpaars 1" mit dem Schaltverstärker 13 wird damit mit nur zwei Anschlußadern 5, 6 erreicht, die sehr lang sein können, da der Sensor 1, 1' in der Regel weit vom Schaltverstärker 13 entfernt ist. Alle sonstigen elektronischen Verbindungen sind kurze Leitungen.

Da Sensoren im allgemeinen mit Gleichstrom oder -spannung betrieben werden, befindet sich im Bereich der Sensoren zur Gleichrichtung des Wechselstroms bzw. der Wechselspannung eine Wechselstrom/-spannungsschnittstelle 7, die die positive Halbwelle des Wechselstroms/ der Wechselspannung von und zum Sensor 1 bzw. die negative vom und zum Sensor 1' überträgt. Die Wechselstrom/-spannungsschnittstelle ist dadurch gebildet, daß von den Anschlußadern 5 und 6 kurze Anschlußadern 5' bzw. 6' abzweigen, wobei der Sensor 1 mit den Adern 5 und 6 und der Sensor 1' mit den Adern 5' und 6' angeschlossen ist und zwischen Verzweigungsstelle und Sensoreingang bei den Adern 5 und 6' je eine Diode 8' bzw. 8 in Reihe geschaltet ist. Die Polung der Adern und die Schaltung der Dioden (Sperr-/Durchlaßrichtung) ist so gewählt, daß die beiden Sensoren 1, 1' des Sensorpaars antiparallel geschaltet sind, auf Signale fester, unterschiedlicher Polarität reagieren und daher bei Einspeisung von Wechselstrom einander abwechselnd, d.h. mit der Wechselstromfrequenz gepulst, betrieben werden.

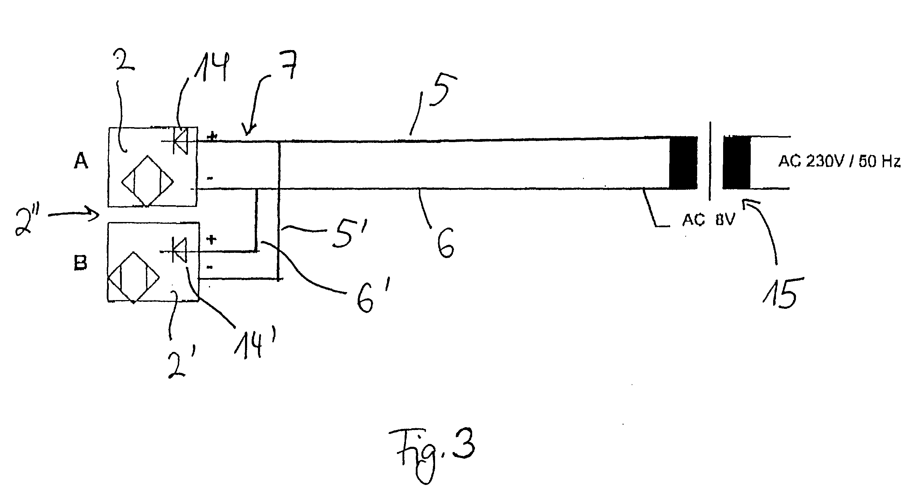

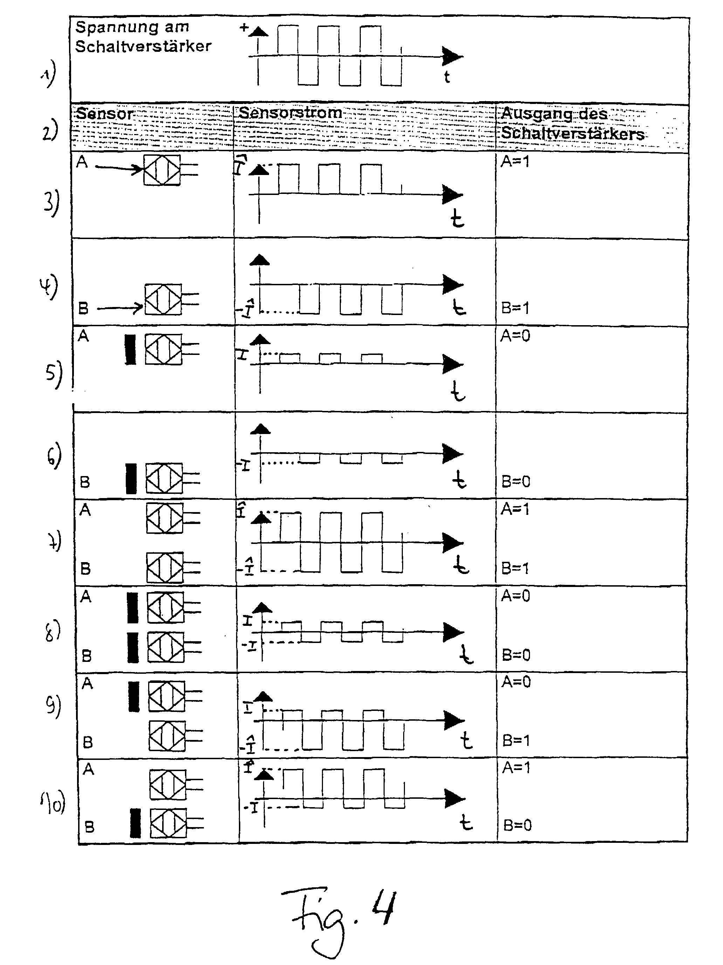

Ein Beispiel des Signalverlaufs ist in Figur 3 gezeigt und weiter unten im Text beschrieben. Der Sensor 1 wird durch den Steuerkreis aus den Anschlußadern 5 und 6 und der Sensor 2 durch den Steuerkreis aus den Anschlußadern 5 und 6, die ab der Verzweigung und von den Anschlußadern 5' und 6' fortgesetzt sind, angesteuert. Über die Anschlußader 6 wird das von der Stromquelle 9 erzeugte und von den Sensoren 1, 1' je nach Zustand des Meßobjekts in der positiven und/oder negativen Amplitude modifizierte Wechselstromsignal an die Auswerteeinheiten 10, 10' übertragen, wobei die Auswerteeinheit 10 dem Sensor 1 zugeordnet und auf positive Signale empfindlich und die Auswerteeinheit 10' dem Sensor 1' zugeordnet und auf negative Signale empfindlich ist. Die Auswerteeinheit erzeugt dann ein Signal, falls die positive bzw. negative Amplitude des Sensorsignals ober- bzw. unterhalb einer einstellbaren Schwelle liegt. Als Auswerteeinheit kann z.B. ein gepolter Komparator oder ein gepolter Analogeingang oder ein A/D-Wandler verwendet werden. Es kann auch eine gemeinsame Auswerteeinheit pro Sensorpaar verwendet werden, wenn diese positive und negative Signale voneinander trennen kann und an der Aus-gangsstufe zwei Ausgangssignale erzeugt, die dann den einzelnen Sensoren zugeordnet werden.

Da das Sensorsignal des einzelnen Sensors und damit auch das von der Auswerteeinheit 10, 10' erzeugte Signal gepulst ist, an der Ausgangsstufe 12, 12' jedoch ein stationäres Signal erwünscht ist, sind der Auswerteeinheit und der Ausgangsstufe Speicherelemente 11, 11' zwischengeschaltet, z.B. ein Spitzenwertspeicher, ein Tiefpaß oder eine Sample-and-Hold-Einheit. Damit kann an der Ausgangsstufe ein Signal, z.B. Ventil offen oder geschlossen, generiert werden, das auf der Zeitskala des Wechselstroms stationär ist, jedoch auf der Zeitskala der an der Meßstelle auftretenden Prozesse Veränderungen darstellen kann.

Es kann leicht ein Sensor- und Auswertesystem mit einer Vielzahl von Sensoren gebildet werden, indem die einzelnen Sensoren immer paarweise, wie in Figur 1 gezeigt, zusammengeschaltet werden. Damit läßt sich ein Sensorsystem aufbauen, in dem eine gegenseitige Beeinflussung nächster Nachbarn weitestgehend ausgeschlossen werden kann, da einander direkt benachbarte Sensoren nicht gleichzeitig betrieben werden und damit eine etwaige induktive Kopplung folgenlos bleibt.

In Figur 2 zeigt ein Blockschaltbild eines Teils eines Sensor- und Auswertesystems aus zwei Sensoren 16, 16', die auch ein Doppelsensor sein können. Der Aufbau der Wechselstromschnittstelle 7 erfolgt durch Vorschalten von zwei Dioden 17, 17' an einander entsprechende Eingänge der Sensoren 16, 16', z.B. den Signal-Eingang, und antiparallele Kopplung an die langen Anschlußadern 5, 6 mit kurzen Anschlußadern 5', 6'. Die zwei Dioden können bereits in einem achtpoligen Bauelement integriert sein, so daß der Anwender die Anschlußadern und die Sensoren nur mit dem Bauelement in der Weise koppeln muß, daß die Sensoren antiparallel geschaltet sind. Die Fortsetzung des Sensor- und Auswertesystems entlang der langen Anschlußadern 5, 6 entspricht dem Aufbau aus Figur 1.

In Figur 3 ist ein Blockschaltbild eines Teils eines Sensor- und Auswertesystems mit einem Sensorpaar 2" bzw. einem Doppelsensor aus zwei Sensoren 2, 2' gezeigt, wobei die Sensoren 2, 2' nach DIN 19234 (NAMUR) mit Verpolschutzdioden 14, 14' ausgestattet sind. Da die zum Aufbau einer Wechselstromschnittstelle 7 benötigten Dioden bereits als Verpolschutzdioden 14, 14' in die Sensoren 2, 2' integriert sind, hier am Plus-Eingang, kann die antiparallele Ansteuerung der Sensoren 2, 2' mit Strom fester Polarität dadurch erfolgen, daß der Plus-Eingang von Sensor 2 mittels Anschlußadern 5, 5' mit dem Minus-Eingang von Sensor 2' und der Minus-Eingang von Sensor 2 mittels Anschlußadern 6, 6' mit dem Plus-Eingang von Sensor 2' ohne die Zwischenschaltung weiterer Dioden parallel geschaltet wird. Die Verbindung des Sensorpaars 2" mit dem Schaltverstärker, der hier nicht dargestellt ist, wird durch zwei lange Anschlußadern 5, 6 hergestellt. Die kurzen Anschlußadern 5', 6' dienen nur der Parallelschaltung der Sensoren 2, 2'.

Mit einem Transformator 15 ist eine galvanische Trennung des Steuerkreises, Anschlußadern 5, 5', 6, 6', und der Sensoren 2, 2' von der Stromversorgung und den Auswerteeinheiten mitsamt nachgeschalteten Elementen vorgenommen. Der Transformator transformiert die Netzspannung auf Spannungen im Bereich einiger Volt, so daß die Stromflüsse im Steuerkreis mit einigen mA innerhalb der von NAMUR zugelassenen Grenzen liegen.

Figur 4 zeigt ein Diagramm zur Darstellung der Sensorsignale und der Signale am Ausgang des Schaltverstärkers in Abhängigkeit vom Zustand der Sensoren A, B eines erfindungsgemäß veschalteten Sensorpaars, z.B. der Sensoren 2, 2' aus Figur 2. In der oberen Zeile ist die am Schaltverstärker anliegende Spannung als Funktion der Zeit t gezeigt. Es handelt sich um Rechteck-spannung, die im Steuerkreis einen Stromfluß mit zeitlich rechteckförmigen Verlauf bewirkt.

In der ersten Spalte sind schematisch die Zustände der Sensoren A, B bzw. des Sensorpaars dargestellt, wobei ein Balken vor dem Sensor symbolisieren soll, daß die Schaltschwelle des Sensors überschritten ist und das Meßobjekt sich in einem vorher definierten Zustand, der abgefragt werden soll, befindet.

In der zweiten Spalte ist der Sensorstrom, der Strom durch den Steuerkreis, als Funktion der Zeit mit derselben Zeitachse wie die in der ersten Zeile dargestellte Spannung gezeigt.

In der letzten Spalte ist der Ausgang des Schaltverstärkers in Form binärer Signale, Null und Eins, bzw. als nicht streng mathematisch zu verstehende Gleichung dargestellt. Eine Eins bedeutet, daß sich der Sensor im Ruhezustand befindet, eine Null, daß ein anderer, vorher definierter Zustand eingetreten ist (symbolisiert durch den Balken vor dem Sensor). Die Angabe A oder B bezieht sich auf den jeweiligen Sensor A oder B und damit auf den Zustand, dessen Eintreten mit dem Sensor A oder B kontrolliert werden soll.

In der dritten und vierten Zeile ist dargestellt, wie sich die Signale zweier Sensoren A bzw. B bei erfindungsgemäßem Anschluß an eine Wechselstromschnittstelle, doch ohne den Anschluß des jeweils anderen Sensors des Sensorpaars im Ruhezustand (kein Balken 16) verhalten. Durch den Sensor A bzw. B (3. bzw. 4. Zeile) kann aufgrund der Wechselspannung nur der positive bzw. negative Stromanteil als Sensorstrom fließen. Die Stromstärke hat im Ruhezustand des Sensors eine Amplitude Î bzw. -Î. Das Signal am Ausgang des Schaltverstärkers ist in beiden Fällen Eins, entsprechend dem Ruhezustand des Sensors bzw. dem "Normalzustand" des Meßobjekts.

In der fünften und sechsten Zeile ist dargestellt, wie sich die Signale zweier Sensoren A bzw. B bei erfindungsgemäßem Anschluß an eine Wechselstromschnittstelle, doch ohne den Anschluß des jeweils anderen Sensors des Sensorpaars im vorher definierten Zustand des Meßobjekts (Balken), bei dem der Sensor schaltet, verhalten. Durch den Sensor A bzw. B (5. bzw. 6. Zeile) kann aufgrund der Wechselspannung nur der positive bzw. negative Stromanteil als Sensorstrom fließen. Die Stromstärke hat im Schaltzustand des Sensors eine Amplitude I bzw. -I, die betragsmäßig kleiner als die Amplitude Î im Ruhezustand ist. Liegt die Amplitude des Sensorstroms betragsmäßig unterhalb einer Schwelle, so wird am Ausgang das Signal Null gegeben. In der 5. und 6. Zeile ist dies jeweils der Fall, so daß das Signal am Ausgang des Schaltverstärkers in beiden Fällen Null ist, was den vorher definierten Zustand des Meßobjekts signalisiert.

In der siebten bis zehnten Zeile ist dargestellt, wie sich die Signale zweier Sensoren A und B bei erfindungsgemäßem Anschluß an eine Wechselstromschnittstelle und Zusammenschluß zu einem Sensorsystem wie in Figur 1 oder 2 verhalten.

In der 7. Zeile befinden sich beide Sensoren A und B im Ruhezustand (kein Balken), die positive wie negative Amplitude beträgt betragsmäßig Î. Der zeitliche Verlauf des Sensorstroms folgt der am Schaltverstärker anliegenden Spannung. Da die positiven und negativen Halbwellen jede für sich ausgewertet werden und ihre Amplitude über der Schaltschwelle liegt, wird am Ausgang für den Sensor A und den Sensor B gleichzeitig jeweils das stationäre Signal Eins erzeugt.

In der 8. Zeile befinden sich beide Sensoren A und B im Schaltzustand (mit Balken), die positive wie negative Amplitude beträgt betragsmäßig I. Der zeitliche Verlauf des Sensorstroms folgt auch in diesem Fall der am Schaltverstärker anliegenden Spannung, jedoch mit verringerter Amplitude I, die unter der Schaltschwelle liegt. Am Ausgang wird für den Sensor A und den Sensor B gleichzeitig jeweils das stationäre Signal Null erzeugt.

In der 9. Zeile befindet sich der Sensoren A im Schaltzustand (mit Balken) und der Sensor B im Ruhezustand (kein Balken). Die positiven und negativen Halbwellen des Sensorstroms haben unterschiedliche Amplituden I bzw. -Î. Die betragsmäßige Amplitude des Sensorstroms liegt damit für den Sensor A unterhalb und für den Sensor B oberhalb der Schaltschwelle. Am Ausgang wird für den Sensor A das stationäre Signal Null und für den Sensor B gleichzeitig das stationäre Signal Eins erzeugt. Die Situation in der 10. Zeile ergibt sich aus der hier geschilderten durch Vertauschen der Sensoren A und B sowie der Vorzeichen der Sensorsignale.

Insgesamt ist ersichtlich, daß immer zwei Sensoren eines Sensorpaars durch Einspeisen von Wechselstrom über einen gemeinsamen Steuerkreis einander abwechselnd betrieben werden können und dennoch die gleiche Information über den Zustand des Sensors und damit des Meßobjekts mit dem gemeinsamen Steuerkreis übermittelt werden kann.

### Gewerbliche Anwendbarkeit:

Der Gegenstand der Erfindung ist insbesondere zur Anwendung für Anlagen, bei denen eine Eigensicherheit, z.B. nach DIN 19234 (NAMUR), gefordert ist, beispielsweise bei Füllstandsüberwachung von Behältnissen mit explosiven Flüssigkeiten oder Druckmessung oder die Bestimmung eines Ventilzustands innerhalb einer derartigen Anlage, geeignet. Bei der Überwachung des Betriebszustandes des einzelnen Sensors, z.B. Kontrolle auf Leitungsbruch, wird der Stromfluß durch den jeweiligen Steuerkreis gemessen, der nicht unter eine bestimmte Grenze fallen darf. Die Nützlichkeit der Erfindung besteht insbesondere darin, daß das erfindungsgemäße Sensor- und Auswertesystem mit jeder Art von Sensoren, mechanischen oder elektronischen, analogen oder digitalen, aufgebaut werden kann. Dabei ist die Auswerteeinheit an die Art des Sensors (Analog-/Digitalbetrieb) angepaßt. Vorteilhaft kann bei der erfindungsgemäßen Schaltung der Sensoren die Kontrolle des Betriebszustandes sensorselektiv durchgeführt werden, da mit der positiven bzw. negativen Halbwelle des Wechselstromsignals praktisch zwei unabhängige Signale oder Informationen zur Verfügung stehen.

### Liste der Bezugszeichen:

- 1, 1', 2, 2', 16, 16': Sensor
- 1", 2", 16": Sensorpaar
- 3: Meßstelle
- 5, 5', 6, 6': Anschlußader
- 7, 7': Wechselstrom- bzw. Wechselspannungsschnittstelle
- 8, 8', 14, 14', 17, 17': Diode (14, 14' Verpolschutzdiode)
- 9: Strom- oder Spannungsquelle
- 10, 10': Auswerteeinheit
- 11, 11': Speicher
- 12, 12': Ausgangsstufe
- 13: Schaltverstärker
- 15: Transformator

## Patentansprüche

1. Sensor- und Auswertesystem zur Datenerfassung an einer Meßstelle (3), insbesondere für Doppelsensoren zur Endlagen- und Grenzwerterfassung, bestehend aus wenigstens zwei Sensoren (1,1',2,2', 16, 16'), die über einen Steuerkreis an einen räumlich beabstandeten Schaltverstärker (13) mit einer Strom- oder Spannungsquelle (9) angeschlossen sind, wobei eine Anschlußader (5,5') von der Strom- oder Spannungsquelle zum Sensor (1,1',2,2', 16, 16') und eine weitere Anschlußader (6,6') vom Sensor (1,1',2,2', 16, 16') zu einer Auswerteeinheit (10,10') führt und das Sensorsignal jedes Sensors (1,1', 2,2', 16, 16') normalerweise in einer Veränderung des Stromflusses gegenüber dem Stromfluß im Ruhezustand des Sensors (1,1',2,2',16,16') besteht und das Sensorsignal über den Steuerkreis zum Schaltverstärker (13) übertragen wird, um dort in einer Auswerteeinheit (10, 10') ausgewertet und an einer Ausgabestufe (12,12') in Form von Signalen als Funktion des Sensors (1,1',2,2',16,16') und der Zeit ausgegeben zu werden, gekennzeichnet durch folgende Merkmale:
a) je zwei Anschlußadern (5,5',6,6') zum Aufbau des Steuerkreises sind je zwei Sensoren (1,1',2,2',16,16') - einem Sensorpaar (1",2",16") - gemeinsam zugeordnet,
b) jedem Sensorpaar (1",2",16") ist eine Wechselstrom- oder Wechselspannungsschnittstelle (7,7') zugeordnet, die sich im Bereich der Sensoren (1,1',2,2',16,16') befindet und positive Signale zu und von einem Sensor (1, 2,16) sowie negative Signale zu und von dem anderen Sensor (1', 2',16') des Sensorpaars (1",2",16") zu übertragen imstande ist, wobei die zwei Sensoren (1,1',2,2',16,16') des Sensorpaars (1",2",16") antiparallel zusammengeschaltet sind und stets einander abwechselnd betrieben werden,
c) der Schaltverstärker (13) trifft die Zuordnung der über dieselben Anschlußadern (5, 5', 6, 6') übermittelten Sensorsignale eines Sensorpaars (1", 2",16") zu dem jeweiligen Sensor (1,1',2,2',16,16') anhand der Polarität der Signale und erzeugt zwei Ausgangssignale, die den einzelnen Sensoren zugeordnet sind,
d) die Strom- oder Spannungsquelle (9) ist eine Wechselstrom- oder Wechselspannungsquelle.

2. Sensor- und Auswertesystem nach Anspruch 1,
dadurch gekennzeichnet,
daß zur Bildung der Wechselstrom- oder Wechselspannungsschnittstelle (7,7') von den Anschlußadern (5, 6), die die Verbindung zum Schaltverstärker herstellen, im Bereich der Sensoren (1, 1', 2, 2',16,16') je eine kurze Anschlußader (5', 6') mit einer in Reihe geschalteten Diode (8, 8', 14, 14', 17, 17') abzweigt, wobei jeder Sensor (1, 1', 2, 2', 16,16') des Sensorpaars (1", 2", 16") mit zwei Anschlußadern (5, 5', 6, 6'), davon eine mit Diode (8, 8', 14, 14', 17, 17'), entgegengesetzer Polarität angeschlossen ist, d.h. die Sensoren eines Sensorpaars antiparallel zusammengeschaltet sind.

3. Sensor- und Auswertesystem nach Anspruch 1 oder 2,
dadurch gekennzeichnet,
daß die Wechselstrom/-spannungsschnittstelle (7) mit Verpolschutzdioden (14,14') aufgebaut ist, die bereits im Sensor (1, 1', 2, 2') integriert sind.

4. Sensor- und Auswertesystem nach Anspruch 1 oder 2,
dadurch gekennzeichnet,
daß die Sensoren (1,1',2,2', 16, 16') elektronische Sensoren oder mechanische Kontakte sind.

5. Sensor- und Auswertesystem nach Anspruch 1 oder 2,
dadurch gekennzeichnet,
daß der zum Schaltverstärker (13) führenden Anschlußader (6) wenigstens ein gepolter Komparator als Auswerteeinheit (10,10') mit einem Speicher (11,11') nachgeschaltet ist, der an der Ausgangsstufe (12,12') zwei statische Signale entsprechend dem Zustand der Sensoren (1,1',2,2',16,16') des Sensorpaars (1",2",16") generiert.

6. Sensor- und Auswertesystem nach Anspruch 1, dadurch gekennzeichnet,
daß je Sensorpaar (1",2",16") eine Auswertung des Signals auf Leitungsbruch und Leitungskurzschluss getrennt nach den Sensoren (1, 1', 2, 2') vorgesehen ist.

7. Sensor- und Auswertesystem nach Anspruch 1 oder 2,
dadurch gekennzeichnet,
daß der Steuerkreis galvanisch von der Strom- oder Spannungsquelle (9) und von der Auswerteeinheit (10, 10') und nachgeschalteten Elementen (11, 11', 12, 12') getrennt ist.

8. Sensor- und Auswertesystem nach Anspruch 1 oder 2,
dadurch gekennzeichnet,
daß die Sensoren (1,1',2,2',16,16') gepolte Analogtransmitter und die Auswerte-einheiten (10,10') gepolte Analogeingänge oder A/D-Wandler mit Speicher-verhalten sind.

9. Sensor- und Auswertesystem nach Anspruch 1 oder 2,
dadurch gekennzeichnet,
daß mehr als zwei Sensoren über einen gemeinsamen Steuerkreis betrieben werden, wobei sich vor dem Sensor und im Schaltverstärker miteinander synchronisierte Sampleeinheiten befinden, so daß ein Sensor zu einem gegebenen Zeitpunkt kurzzeitig, jedoch nie gleichzeitig mit einem anderen Sensor, angeschaltet wird und das analysierte Sensorsignal der entsprechenden Ausgangsstufe zugewiesen wird.

## Claims

1. Sensor and evaluation system for acquiring data at a measuring point (3), especially for double sensors for detecting final positions and limit values, consisting of at least two sensors (1,1',2,2',16,16') that are connected via a control circuit to a remotely located switching amplifier (13) with a current source or voltage source (9), whereby a connection wire (5,5') leads from the current source or voltage source to the sensor (1,1',2,2',16,16') and another connection wire (6,6') leads from the sensor (1,1',2,2,16,16') to an evaluation unit (10,10'), and the sensor signal of each sensor (1,1',2,2',16,16') normally consists of a change in the current flow as compared to the current flow in the quiescent state of the sensor (1,1',2,2',16,16') and said sensor signal is transmitted via the control circuit to the switching amplifier (13) in order to be evaluated there in an evaluation unit (10,10') and to be output at an output stage (12,12') in the form of signals as a function of the sensor (1,1',2,2',16,16') and of the time,
characterized by the following features:
a) two sensors (1,1',2,2',16,16') - a sensor pair (1",2"16") - are associated together with each of the two connection wires (5,5',6,6') to form the control circuit;
b) an alternating current or alternating voltage interface (7,7') is associated with each sensor pair (1",2"16"), and said interface (7,7') is located in the vicinity of the sensors (1,1',2,2',16,16') and is capable of transmitting positive signals to and from one sensor (1,2,16) as well as negative signals to and from the other sensor (1',2',16') of the sensor pair (1",2"16"), whereby the two sensors (1,1',2,2',16,16') of the sensor pair (1",2"16") are connected together antiparallel and are always operated alternately with respect to each other;
c) on the basis of the polarity of the signals, the switching amplifier (13) establishes the association of the sensor signals of a sensor pair (1",2"16") that are transmitted via the same connection wires (5,5',6,6') to the sensor (1,1',2,2',16,16') in question;
d) the current source or voltage source (9) is a current source or voltage source with an alternating polarity.

2. Sensor and evaluation system according to Claim 1, characterized in that
in order to form the alternating current or alternating voltage interface (7,7') of the connection wires (5,6) that establish the connection to the switching amplifier, a short connection wire (5',6') with a series-connected diode (8,8',14,14',17,17') branches off in the vicinity of each of the sensors (1,1',2,2',16,16'), whereby each sensor (1,1,2,2',16,16') of the sensor pair (1",2"16") is connected to two connection wires (5,5',6,6') - one of them with a diode (8,8',14,14',17,17') - having opposite polarity, i.e. the sensors of a sensor pair (1",2"16") are connected together antiparallel.

3. Sensor and evaluation system according to Claim 1 or 2, characterized in that
the alternating current/voltage interface (7) is set up with reverse-connect protection diodes (14,14') that are already integrated into the sensor (1,1',2,2').

4. Sensor and evaluation system according to Claim 1 or 2, characterized in that
the sensors (1,1',2,2',16,16') are electronic sensors or mechanical contacts.

5. Sensor and evaluation system according to Claim 1 or 2, characterized in that
the connection wire (6) leading to the switching amplifier (13) is followed by at least one polarized comparator as an evaluation unit (10,10') with a storage device (11,11') and said comparator generates two static signals at the output stage (12,12'), corresponding to the state of the sensors (1,1',2,2',16,16') of the sensor pair (1",2"16").

6. Sensor and evaluation system according to Claim 1, characterized in that for each sensor pair (1",2"16"), the current is provided separately to the sensors (1,1',2,2') for an evaluation of the signal for line breaks and line short circuits.

7. Sensor and evaluation system according to Claim 1 or 2, characterized in that
the control circuit is galvanically separated from the current source or voltage source (9) and from the evaluation unit (10,10') and the subsequent elements (11,11',12,12').

8. Sensor and evaluation system according to Claim 1 or 2, characterized in that
the sensors (1,1',2,2',16,16') are polarized analog transmitters and the evaluation units (10,10') are polarized analog inputs or A/D transducers with storage behavior.

9. Sensor and evaluation system according to Claim 1 or 2, characterized in that
more than two sensors are operated via a shared control circuit, whereby there are synchronized sampling units before the sensor and in the switching amplifier, so that one sensor is switched on briefly at a given point in time but never at the same time as another sensor, and the analyzed sensor signal is associated with the appropriate output stage.

## Revendications

1. Système capteur et évaluateur servant à la saisie de données dans un point de mesure (3), en particulier pour capteurs doubles destinés à la détection de positions extrêmes et de valeurs limites, comprenant au moins deux capteurs (1,1',2,2',16,16') connectés, par l'intermédiaire d'un circuit de commande, à un amplificateur de commutation (13) placé à distance avec une source de courant ou de tension (9), un conducteur de raccordement (5,5') conduisant de la source de courant ou de tension au capteur (1,1',2,2',16,16') et un autre conducteur de raccordement (6,6') conduisant du capteur (1,1',2,2',16,16') à une unité d'évaluation (10,10'), le signal de chaque capteur (1,1', 2,2',16,16') consistant normalement en un changement du flux de courant par rapport au flux de courant en mode inactif du capteur (1,1',2,2',16,16'), et le signal du capteur étant transmis via le circuit de commande à l'amplificateur de commutation (13) pour y être évalué dans une unité d'évaluation (10,10') et sorti au niveau d'un étage de sortie (12,12') sous forme de signaux étant fonction du capteur (1,1',2,2',16,16') et du temps,
caractérisé par les faits suivants:
a) deux conducteurs de raccordement (5,5',6,6') pour l'établissement du circuit de commande sont assignés conjointement à deux capteurs (1,1',2,2',16,16') - à une paire de capteurs (1",2",16"),
b) à chaque paire de capteurs (1",2",16") est assignée une interface à courant alternatif ou à tension alternative (7,7') qui se trouve dans la zone des capteurs (1,1',2,2',16,16') et est en mesure de transmettre des signaux positifs vers et à partir d'un capteur (1,2,16) et des signaux négatifs vers et à partir de l'autre capteur (1',2',16') de la paire de capteurs (1",2",16"), les deux capteurs (1,1',2,2',16,16') de la paire de capteurs (1",2",16") étant interconnectés en antiparallèle et étant opérés toujours de manière alternante,
c) l'amplificateur de commutation (13) assigne les signaux d'une paire de capteurs (",2",16") transmis par les mêmes conducteurs de raccordement (5,5',6,6') au capteur respectif (1,1',2,2',16,16'), ceci à l'aide de la polarité des signaux, et engendre deux signaux de sortie qui sont assignés aux capteurs individuels,
d) la source de courant ou de tension (9) est une source de courant alternatif ou de tension alternative.

2. Système capteur et évaluateur selon la revendication 1,
caractérisé en ce que, pour établir l'interface à courant alternatif ou à tension alternative (7,7'), un court conducteur de raccordement (5',6') avec une diode montée en série (8,8',14,14',17,17') est dérivé de chacun des conducteurs de raccordement (5,6) qui établissent la connexion avec l'amplificateur de commutation, chacun des capteurs (1,1',2,2',16,16') de la paire de capteurs (1",2",16") étant connecté à l'aide de deux conducteurs de raccordement (5,5',6,6') - dont l'un avec diode (8,8',14,14',17,17') - de polarité opposée, à savoir les capteurs d'une paire de capteurs étant interconnectés en antiparallèle.

3. Système capteur et évaluateur selon la revendication 1 ou 2,
caractérisé en ce que l'interface à courant alternatif/tension alternative (7) est montée avec des diodes de protection contre les mauvaises polarités (14,14') déjà intégrées au capteur (1,1',2,2').

4. Système capteur et évaluateur selon la revendication 1 ou 2,
caractérisé en ce que les capteurs (1,1',2,2',16,16') sont des capteurs électroniques ou des contacts mécaniques.

5. Système capteur et évaluateur selon la revendication 1 ou 2,
caractérisé en ce qu'au moins un comparateur polarisé faisant office d'unité d'évaluation (10,10') et comportant une mémoire (11,11') est placé en aval du conducteur de raccordement (6) conduisant vers l'amplificateur de commutation (13), ledit comparateur engendrant deux signaux statiques au niveau de l'étage de sortie (12,12') correspondant à l'état des capteurs (1,1',2,2',16,16') de la paire de capteurs (1",2",16").

6. Système capteur et évaluateur selon la revendication 1,
caractérisé en ce que, pour chaque paire de capteurs (1",2",16"), une évaluation séparée du signal est prévue par capteur (1,1',2,2') pour détecter une rupture de ligne ou un court-circuit de ligne.

7. Système capteur et évaluateur selon la revendication 1 ou 2,
caractérisé en ce que le circuit de commande est isolé électriquement de la source de courant ou de tension (9) ainsi que de l'unité d'évaluation (10,10') et des éléments placés en aval (11,11',12,12').

8. Système capteur et évaluateur selon la revendication 1 ou 2,
caractérisé en ce que les capteurs (1,1',2,2',16,16') sont des transmetteurs analogiques et que les unités d'évaluation (10,10') sont des entrées analogiques polarisées ou des convertisseurs analogiques-numériques à comportement mémorisant.

9. Système capteur et évaluateur selon la revendication 1 ou 2,
caractérisé en ce que plus que deux capteurs sont opérés par l'intermédiaire d'un circuit de commande commun, des unités d'échantillonnage synchronisées entre elles se trouvant en amont du capteur et dans l'amplificateur de commutation, de sorte que, à un moment donné, un capteur soit mis en circuit brièvement, mais jamais en même temps avec un autre capteur, et que le signal analysé du capteur soit assigné à l'étage de sortie correspondant.
